**Europäisches Patentamt**

**European Patent Office**

**Office européen des brevets**

(19)

(11) Veröffentlichungsnummer : **0 326 031 B1**

(12)     # EUROPÄISCHE PATENTSCHRIFT

(45) Veröffentlichungstag der Patentschrift :
05.08.92 Patentblatt 92/32

(51) Int. Cl.⁵ : **B29C 45/76**

(21) Anmeldenummer : **89100975.5**

(22) Anmeldetag : **20.01.89**

(54) Verfahren und Vorrichtung zur Qualitätsüberwachung von durch Spritz- oder Druckgiessmaschinen hergestellten Formteilen.

(30) Priorität : **26.01.88 DE 3802147**

(43) Veröffentlichungstag der Anmeldung :
**02.08.89 Patentblatt 89/31**

(45) Bekanntmachung des Hinweises auf die
Patenterteilung :
**05.08.92 Patentblatt 92/32**

(84) Benannte Vertragsstaaten :
**AT BE CH DE FR GB IT LI LU NL SE**

(56) Entgegenhaltungen :
**EP-A- 0 221 607**
**DD-A- 217 647**
**DD-A- 229 780**
**DE-A- 2 223 238**
**DE-C- 850 952**
**DE-C- 3 601 408**

(73) Patentinhaber : **BATTENFELD**
**AUTOMATISIERUNGSTECHNIK Ges.m.b.H.**
**Wiener-Neustädter-Strasse 81**
**A-2542 Kottingbrunn (AT)**

(72) Erfinder : **Heindl, Friedrich**
**Dörflergasse 43**
**A-2500 Baden (AT)**
Erfinder : **Schuecker, Franz**
**Birkengasse 23**
**A-2542 Kottingbrunn (AT)**
Erfinder : **Huber, Anton, Dipl.-Ing.**
**Josef-Moc-Gasse 14**
**A-2560 Berndorf (AT)**

(74) Vertreter : **Müller, Gerd et al**
**Patentanwälte**
**HEMMERICH-MÜLLER-GROSSE-POLLMEIER-MEY-**
**VALENTIN Hammerstrasse 2**
**W-5900 Siegen 1 (DE)**

## Beschreibung

Die Erfindung betrifft ein Verfahren zur Qualitätsüberwachung von durch Spritz- bzw. Druckgießmaschinen hergestellten Formteilen bei welchem einzelne Formteile nach dem Ausstoßen aus der Spritzform gewogen werden, bei dem dann der Gewichts-Istwert mit dem Gewichts-Sollwert verglichen wird sowie schließlich ein daraus resultierendes Differenzsignal die Spritz- bzw. Druckgießmaschine und/oder die Spritzform im Sinne einer Gewichtskorrektur für die Formteile beeinflußt wird.

Gegenstand der Erfindung ist aber auch eine Vorrichtung zur Durchführung dieses Verfahrens, bestehend aus einer dem Formteil-Ausfalltrichter der Spritz- oder Druckgießmaschine nachgeordneten elektrischen Prüfwaage, über deren Ausgangssignal die Spritz- bzw. Druckgießmaschine und/oder die Spritzform beeinflußbar ist.

Ein Qualitäts-Überwachungssystem dieser Art ist bspw. durch die EP-A-02 21 607 bekannt. Diese Druckschrift zeigt einen Regelkreis, der über eine Regelabweichung des festgestellten Gewichts-Istwertes in die Einstellparameter einer Spritzgießmaschine, insbesondere der Einspritzeinheit, eingreift. Bei der EP-A-02 21 607 ist zwischen der Spritzgießmaschine und der Wägeeinrichtung ein Förderband aufgebaut, welches den Transport der einzelnen Formteile aus dem Spritzwerkzeugbereich in den Wägebereich durchführt. Mit einem solchen Förderband ist eine zentrische Zuführung der zu wiegenden Teile auf die Waagschale nicht ohne weiteres möglich, da eine das mittige Aufbringen gewährleistende Positionierung der Abwurfstelle des Förderbandes nicht nur abhängig ist vom jeweiligen Gewicht der zu transportierenden Formteile, sondern auch von der Laufgeschwindigkeit des Förderbandes.

Bei den Genauigkeitsbereichen der üblicherweise für dynamische Wägungen zum Einsatz gelangenden Ausfall-Prüfwaagen, wie sie nach der EP-A-02 21 607 zum Einsatz gelangen, ist es für das Wägeergebnis nicht von entscheidender Bedeutung, daß sich der zu wiegende Gegenstand für den Wägevorgang möglichst exakt in der Mitte der Waagschale befindet, da solche Ausfall-Prüfwaagen normalerweise mit einem Genauigkeitsbereich von +/- 0,1 g arbeiten.

Vielfach werden jedoch an die Formteile Qualitätsanforderungen gestellt, bei denen ein Genauigkeitsbereich der vorgenannten Größenordnung bei weitem nicht ausreichend ist. Es kann nämlich durchaus vorkommen, daß auch Genauigkeitsbereiche erforderlich sind, die zwischen +/- 0,01 g und +/- 0,001 g liegen. In diesen Fällen ist dann ein genaues Verwiegen der einzelnen Formteile unter Laborbedingungen notwendig, was nur mit erheblichem Zeit-und kostenaufwand durchführbar ist.

Die DE-C-36 01 408 befaßt sich mit einer Analysenwaage, bei der die gesamte Wägezone während des eigentlichen Wägevorganges gegen die Umgebungseinflüsse abgeschirmt ist. Eine Einbindung einer solchen Analysenwaage in eine automatisch laufende Produktionsmaschine ist jedoch nicht vorgesehen und auch nicht möglich, da dort zwei hintereinander geschaltete und sich im gegenseitigen Wechsel zwischen einer Freigabestellung und eine Sperrstellung bewegende Schließelemente für die Wägekammerschleuse vorgesehen sind. Außerdem ist eine Verlagerungsbewegung der Waagschale zwischen einer oberen Aufnahmeposition und einer unteren Wägeposition notwendig, bevor der eigentliche Wägevorgang sich überhaupt bewerkstelligen läßt.

Ziel der Erfindung ist es, ein Qualitätsüberwachungssystem der eingangs näher definierten Art zu schaffen, bei dem eine staatische Genauwägung der Formteile in die Automatisierungsabläufe einer Spritzgießmaschine einbezogen wird, wobei sich eine solche staatische Genauwägung auch an eine dynamische Ausfall-Prüfwägung anschließen kann, ohne daß es hier zu einer Ortsveränderung des der Wägung zu unterwerfenden Formteils bedarf, und ohne daß eine Beeinträchtigung der Wägung durch äußere Einflüsse eintreten kann.

Diese Aufgabe wird in verfahrenstechnischer Hinsicht erfindungs-gemäß dadurch gelöst, daß - nach Anspruch 1 - einerseits jedes Formteil möglichst exakt zentrisch auf die Wägezone geführt wird, daß andererseits die gesamte Wägezone mindestens während des Wägevorgangs gegen die Umgebungseinflüsse abgeschirmt wird, daß das durch die Wägung ermittelte Formteilgewicht mit zwei Gewichts-Grenzwerten verglichen wird, daß durch diese Gewichts-Grenzwerte jeweils Gut-Formteile und Ausschuß-Formteile bestimmt werden, und daß dann die Gut-Formteile und die Ausschuß-Formteile aus dem Bereich der Wägezone in unterschiedlichen Richtungen entsorgt bzw. abtransportiert werden.

Diese Verfahrensart hat den Vorteil, daß die Qualitätsüberwachung sich auf besonders rationelle Art und Weise durchführen läßt, gleichgültig ob lediglich die sogenannte Ausfall-Prüfwägung durchgeführt wird, oder ob ein genaues Verwiegen unter Laborbedingungen vorgenommen werden muß. Es kann sich nämlich an jede beliebige Ausfall-Prüfwägung unmittelbar eine genaue Verwiegung unter Laborbedingungen anschließen. Nachdem nämlich aufgrund einer durchgeführten Ausfall-Prüfwägung der Schließvorgang des Spritzwerkzeuges bzw. der nächste Arbeitsgang der Spritz-bzw. Druckgießmaschine in Gang gekommen ist, kann die vorhandene Prüfwaage automatisch von der sogenannten dynamischen Verwiegung auf die statische Verwiegung umgeschaltet werden. Hiernach stellt sie nun innerhalb einer mehrere Sekunden, bspw. etwa 3 Sekunden, betragenden Beruhigungszeit das Gewicht des auf der Wägezone befindlichen Formteils innerhalb eines erhöhten, nämlich an der Genauigkeit der jeweils eingesetzten Waage orientierten Genauigkeitsbereichs von z.B. +/- 0,01 g oder im Extremfall sogar von bspw. +/- 0,001 g fest. Dieses durch statische Verwiegung genau ermittelte Gewicht kann dann mit zwei vorgegebenen Grenzwerten innerhalb der Maschinensteuerung verglichen werden. Mit diesen Grenzwerten wird dann bestimmt, ob es sich um ein Gut-Formteil oder aber um ein Ausschuß-Formteil handelt. Gut-Formteile und Ausschuß-Formteile lassen sich sodann in unterschiedlichen Richtungen aus dem Bereich der Wägezone abtransportieren.

Verfahrenstechnisch hat es sich des weiteren bewährt, wenn nach Anspruch 2 die Formteil-Zuführung auf die Wägezone und die Abschirmung der Wägezone zeitlich nacheinander bewirkt werden, weil auch die Ausfallwägung und die genaue Verwägung zeitlich nacheinander durchgeführt werden. Nur wenn nach einer Ausfallwägung auch eine Genauverwiegung eingeleitet wird, besteht die Notwendigkeit, die Abschirmung der Wägezone gegen Umgebungseinflüsse vorzunehmen.

Eine weiterführende, verfahrenstechnische Maßnahme besteht nach Anspruch 3 noch darin, daß die Wägezone bei der Abschirmung nahezu luftdicht abgeschlossen wird, so daß selbst geringe Luftbewegungen, welche die Genauverwägung beeinträchtigen könnten, nicht in den Bereich der Wägezone gelangen.

Eine Vorrichtung zur Durchführung des vorstehend spezifizierten Qualitätsüberwachungs-Verfahrens zeichnet sich erfindungsgemäß nach Anspruch 4 hauptsächlich dadurch aus, daß vom Ausfalltrichter der Spritz- bzw. Druckgießmaschine her ein Spritzling-Zentrierkanal wenigstens zeitweilig bis dicht an die Wägezone der Prüfwaage heranführbar und darüber hinaus, ebenfalls mindstens zeitweilig, eine Abschirmhaube über die gesamte Wägezone setzbar ist.

Diese Maßnahmen stellen sicher, daß jedes einzelne Formteil - selbst für seine dynamische Verwiegung - sehr exakt dem empfindlichsten Bereich der Wägezone zugeführt werden kann und daher einen schnellen und guten Vergleich von Istwert und Sollwert gewährleistet. Bei der anschließenden statischen Wägung erweist es sich dann als ebenso wichtig, daß alle Umwelteinflüsse, die ein genaues Verwiegen unter Laborbedingungen beeinträchtigen könnten, von der Wägezone ferngehalten werden.

Nach der Erfindung besteht ein weiterbildendes Merkmal der Vorrichtung gemäß Anspruch 5 darin, daß mindestens das Auslaßende des Spritzling-Zentrierkanals einen Durchmesser hat, der eng an daß Größtmaß des jeweiligen Formteils angepaßt ist. Wird ein solcher Spritzling-Zentrierkanal auf das Zentrum der Wägezone an der Prüfwaage gerichtet, dann werden Vorbedingungen geschaffen, die einer optimalen Wägung sehr zuträglich sind, unabhängig davon, ob es sich nur um eine dynamische Ausfallwägung handelt, oder aber ob eine statische Genauverwiegung durchgeführt wird.

Ein weiterbildendes Erfindungsmerkmal wird nach Anspruch 6 auch darin gesehen, daß der Spritzling-Zentrierkanal relativ zur Wägezonen-Ebene der Prüfwaage heb- und senkbar angeordnet ist. Eine solche Ausgestaltung des Spritzling-Zentrierkanals ist dann von besonderer Bedeutung, wenn gemäß Anspruch 7 die Abschirmhaube von einem normal zur Bewegungsrichtung des Spritzling-Zentrierkanals verstellbaren Schieber und einer quer zu dessen Bewegungsrichtung orientierten Anschlagwand hierfür besteht, wobei Schieber und Anschlagwand gegen eine die Wägezone der Prüfwaage umgebende Basis abdichtbar sind.

Die Anschlagwand für den Abschirmhauben-Schieber kann vom Steg eines etwa U-förmig begrenzten Formteil-Entsorgungsschiebers gebildet werden, welcher der Prüfwaage zugeordnet ist und zum Abtransport der Gut-Formteile sowie auch der Ausschuß-Formteile aus dem Bereich der Prüfwaage dient.

In der Zeichnung ist ein Ausführungsbeispiele der Erfindung dargestellt. Es zeigt

Figur 1 in schematisch vereinfachter Vertikalschnitt-Darstellung eine Vorrichtung zur Qualitätsüberwachung von durch Spritz- bzw. Druckgießmaschinen hergestellten Formteilen,

Figur 2 einen Schnitt entlang der Linie II-II in Fig. 1,

Figur 3 einen Schnitt entlang der Linie III-III in Fig. 1 und

Figur 4 die Vorrichtung in einem der Fig. 1 entsprechenden Vertikalschnitt, jedoch in einer anderen Betriebsstellung,

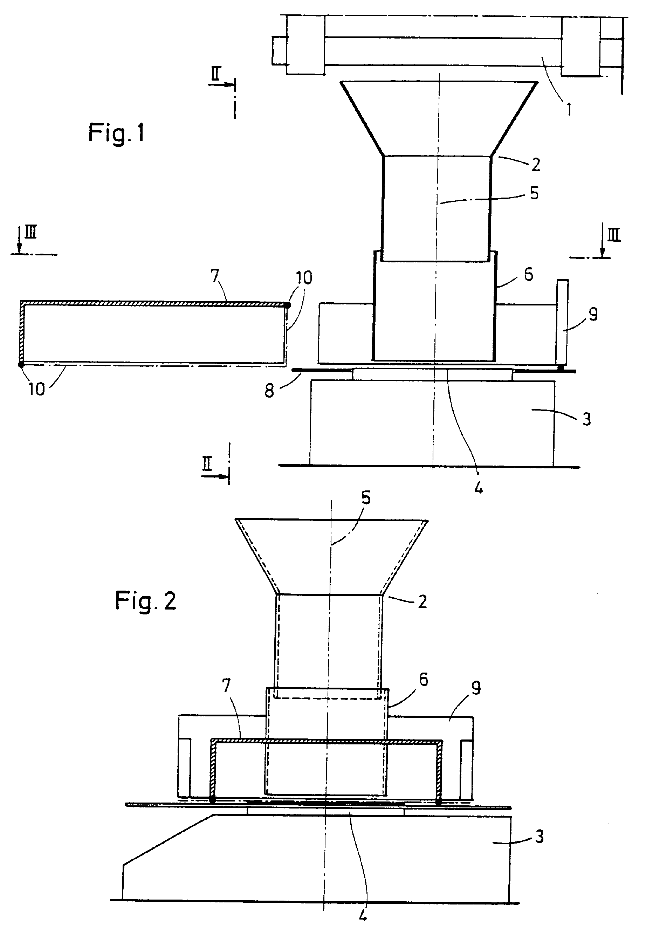

In Fig. 1 der Zeichnung ist von einer vollständigen Spritzgießmaschine lediglich ein Teilstück der Schließeinheit 1 zu sehen, in welcher die Formhälften der Spritzform aufgenommen werden.

Unterhalb der Schließeinheit 1 ist dabei in die Spritzgießmaschine ein sogenannter Ausfalltrichter 2 eingebaut, in den die nach jedem einzelnen Spritzgießvorgang aus der Spritzform ausgestoßenen oder sonstwie entfernten Formteile herunterfallen.

Mit Abstand unterhalb des Ausfalltrichters 2 ist eine Prüfwaage 3 aufgestellt, die als elektronische Waage ausgelegt ist und sich vorzugsweise für sogenannten CNC-Betrieb eignet. Diese Prüfwaage 3 ist so aufgestellt, daß der die Wägezone 4 bildende Wiegeteller vorzugsweise in einer Achsflucht mit der Längsachse 5 des Ausfalltrichters 2 liegt.

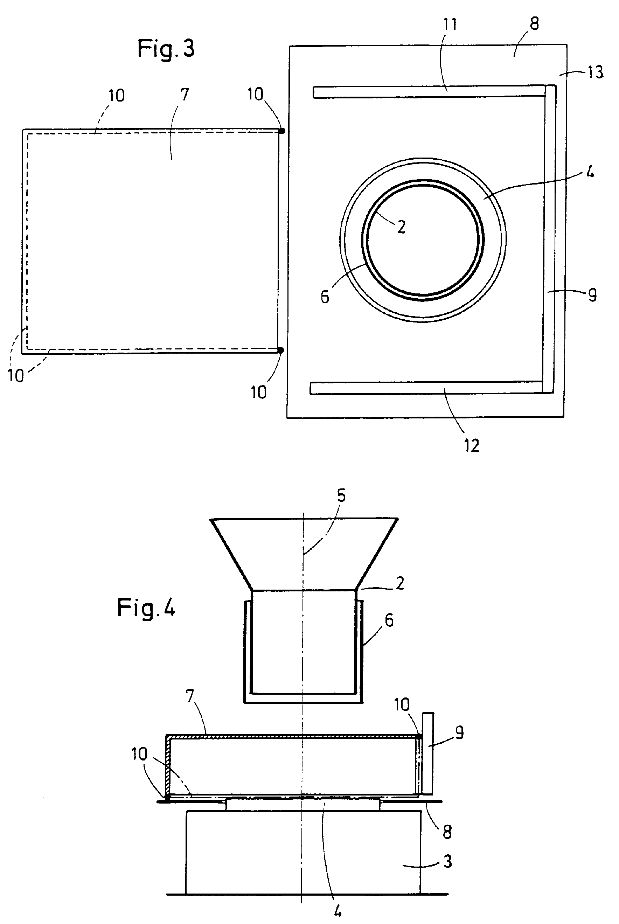

Der Abstandsbereich zwischen dem unteren Ende des Ausfalltrichters 2 und der Wägezone 4 der Prüfwaage 3 kann durch einen Spritzling-Zentrierkanal 6 wenigstens zeitweilig nahezu vollständig überbrückt werden, wobei dieser Spritzling-Zentrierkanal 6 ebenfalls Fluchtlage mit der Längsachse 5 des Ausfalltrichters 2 hat. Der Spritzling-Zentrierkanal 6 ist dabei heb- und senkbar aufgehängt und läßt sich durch -nicht gezeigte - Antriebsvorrichtungen, bspw. Druckluftzylinder, schnell und exakt zwischen seiner aus den Fig. 1 und 2 ersichtlichen unteren Endstellung und der in Fig. 4 gezeigten oberen Endstellung verlagern.

In der unteren Endstellung des Spritzling-Zentrierkanals 6 hat dieser nur einen geringfügigen Spaltabstand von der Ebene der Wägezone 4, wie das deutlich die Fig. 1 und 2 erkennen lassen. Hingegen ist in der oberen Endstellung des Spritzling-Zentrierkanals 6 ein relativ großer Abstand zwischen dessen unterem Ende und der Basis der Wägezone 4 vorhanden, wie das die Fig. 4 erkennbar macht.

Abweichend von der in den Fig. 1, 2 und 4 gezeigten Ausführung kann es sich als vorteilhaft erweisen, wenn mindestens das Auslaßende des Spritzling-Zentrierkanals 5 lediglich einen Durchmesser erhält, welcher relativ eng an das Größtmaß des jeweiligen Formteils angepaßt ist. Hierdurch wird sichergestellt, daß jedes durch den Ausfalltrichter 2 auf die Wägezone 4 der Prüfwaage 3 herabfallende Formteil einigermaßen zentrisch auf die Wägezone 4 der Prüfwaage 3 auftrifft und damit eine sehr exakte Wägung sicherstellt. Der relativ exakt zentrischen Ausrichtung des Formteils ist es dabei auch dienlich, daß der Spritzling-Zentrierkanal 6 in seiner unteren Endstellung nur einen relativ geringen Spaltabstand von der Wägezone 4 hat und daher das Formteil auch in der Ausrichtlage auf der Wägezone 4 verbleibt, wenn der Spritzling-Zentrierkanal 6 in die aus Fig. 4 ersichtliche Stellung hochgefahren wird.

Die Prüfwaage 3 kann in der aus den Fig. 1 bis 3 der Zeichnung ersichtlichen Funktionsstellung der gesamten Qualitätsüberwachungs-Vorrichtung als sogenannte Ausfall-Prüfwaage betrieben werden, die mit einer sogenannten dynamischen Wägung auf ein durch den Ausfalltrichter 2 auf ihre Wägezone 4 herunterfallendes Formteil anspricht. Sie arbeitet dabei mit einem Genauigkeitsbereich von +- 0,1 g und ermittelt dabei das Formteilgewicht innerhalb einer Zeitspanne von weniger als 1 Sekunde, bspw. innerhalb von 0,6 Sekunden. Das Ist-Gewicht des Formteils wird dabei mit einem in der Prüfwaage 3 vorgegebenen Soll-Gewicht verglichen. Bei Abweichungen vom Soll-Gewicht wird ein Differenzsignal erzeugt, welches dann steuernd und/oder regelnd auf die Spritzgießmaschine und/oder die in diese eingebaute Spritzform einwirkt, um für die anschließend hergestellten Formteile das Ist-Gewicht zum Soll-Gewicht hin nachzuführen.

Da für qualitativ hochwertige Formteile in den meisten Fällen die sogenannte dynamische Ausfallwägung zum Zwecke der Qualitäts-Optimierung nicht ausreicht, ist es vielfach erforderlich, im Anschluß an eine dynamische Ausfallwägung noch eine statische Genauwägung unter Laborbedingungen durchzuführen, und zwar unter Einhaltung von Genauigkeitsbereichen, die z.B. zwischen +/- 0,01 g und +/- 0,001 g liegen können.

Eine solche statische Genauwägung kann aber nur im völligen Ruhezustand des auf der Wägezone 4 der Prüfwaage 3 befindlichen Formteils durchgeführt werden.

Im Anschluß an die jeweilige dynamische Ausfallwägung wird zu diesem Zweck die Prüfwaage 3 automatisch auf die statische Genauwägung umgeschaltet, welche dann während des nächstfolgenden Spritzvorgangs der Spritzgießmaschine stattfindet. Bis zur Einleitung der statischen Genauwägung steht dabei ein Zeitraum von mehreren Sekunden, bspw. von 3 Sekunden, als Beruhigungszeit für das auf die Wägezone 4 der Prüfwaage 3 gelangte Formteil zur Verfügung.

Damit dann die statische Genauwägung der Prüfwaage 3 eingeleitet werden kann, ohne daß sich eine Beeinträchtigung des Wiegeergebnisses durch die in Fertigungsbetrieben üblicherweise herrschenden Umwelteinflüsse ergibt, arbeitet die Qualitätsüberwachungsvorrichtung noch mit einer Abschirmhaube 7, welche zeitweilig aus ihrer den Fig. 1 bis 3 entnehmbaren Ruhestellung in die aus Fig. 4 ersichtliche Arbeitsstellung bewegt werden kann, nachdem der Spritzling-Zentrierkanal 6 aus der abgesenkten Stellung angehoben wurde.

Auch die Abschirmhaube 7 kann dabei durch - nicht gezeigte - Stellantriebe, bspw. Druckmittelzylinder, zwischen der aus den Fig. 1 und 3 ersichtlichen Ruhestellung in die der Fig. 4 entnehmbare Arbeitsstellung verfahren werden. Die Abschirmhaube 7 wirkt dabei in ihrer Arbeitsstellung nach Fig. 4 einerseits mit einer die Wägezone 4 der Prüfwaage 3 umgebenden Basisplatte 8 sowie andererseits mit einer oberhalb dieser Basisplatte 8 angeordneten Anschlagwand 9 zusammen, wie das deutlich in Fig. 4 der Zeichnung zu sehen ist. Damit sich dabei ein möglichst luftdichter Einschluß der Wägezone 4 innerhalb der Abschirmhaube 7 ergibt, sind entlang den Begrenzungskanten der Abschirmhaube 7 Dichtungselemente 10 angeordnet, und zwar derart, daß diese teilweise mit der Basisplatte 8 und teilweise mit der Anschlagwand 9 in Dichtungskontakt treten, wenn die Abschirmhaube 7 in ihre Arbeitsstellung nach Fig. 4 gelangt ist.

Die Stellantriebe für den Spritzling-Zentrierkanal 6 und für die Abschirmhaube 7 können so miteinander gekoppelt werden, daß sich ein synchroner Bewegungsablauf einstellt und sich ihre Bewegungsabläufe daher nicht gegenseitig beeinträchtigen können.

Nachdem die Abschirmhaube 7 ihre Arbeitsstellung nach Fig. 4 erreicht hat, findet die Genauwägung quasi unter Laborbedingungen statt. Das hierbei ermittelte Gewicht des Formteils wird dann mit zwei intern gespeicherten Grenzwerten verglichen. Aufgrund dieser vorgegebenen Grenzwerte werden dann die Gut-Formteile und die Ausschuß-Formteile bestimmt und anschließend entweder zur Gut-Seite oder aber zur Ausschuß-Seite hin entsorgt. Um das zu ermöglichen, ist die Anschlagwand 9 durch zwei quer abstehende Arme 11 und 12 zu einem etwa U-förmig begrenzten Schieber 13 gestaltet, der sich parallel zur Längsrichtung der Anschlagwand 9 oberhalb der Basisplatte 8 und der Wägezone 4 bewegen läßt. Auch als Antrieb für den Schieber 13 können Druckluftzylinder zum Einsatz gelangen. Wird bspw. der Schieber 13 aus der Stellung nach Fig. 3 nach unten bewegt, dann können durch dessen Arm 11 Gut-Formteile entsorgt werden. Wird hingegen der Schieber 13 aus der Stellung nach Fig. 3 in Aufwärtsrichtung gefahren, dann entsorgt dessen Arm 12 Ausschuß-Formteile aus dem Bereich der Wägezone 4.

Erwähnenswert ist noch, daß es für eine optimale Arbeitsweise der Qualitätsüberwachungs-Vorrichtung zweckmäßig ist, wenn nicht nur der Spritzling-Zentrierkanal 6 in seinem Querschnitt eine relativ enge Anpassung an das Größtmaß des jeweiligen Formteils aufweist, sondern darüber hinaus auch die Abschirmhaube 7 in ihren Abmessungen so klein als möglich gewählt wird. Es kommt nämlich darauf an, oberhalb der Wägezone 4 der Prüfwaage 3 für die statische Genauwägung ein möglichst geringes Raumvolumen abzuschließen. Es kann hierdurch auch der unerwünschte Effekt gering gehalten werden, welcher darin liegt, daß ein sich abkühlendes Spritzgießteil in seiner Umgebung Luftbewegungen verursacht.

Denkbar ist auch, die Abschirmhaube 7 mit dem Spritzling-Zentrierkanal 6 gleichgerichtet bewegbar vorzusehen, wenn dafür gesorgt werden kann, daß der Spritzling-Zentrierkanal 6 an seinem unteren Ende sicher abzudichten ist.

In vorteilhafter Weise ist dann die Abschirmhaube 7 unabhängig vom Spritzling-Zentrierkanal 6 vertikal verstellbar vorgesehen und ggf. mit einem Abdichtschieber ausgestattet, der bei abgesenkter Abschirmhaube 7 und hochgefahrenem Spritzling-Zentrierkanal 6 vor das untere Ende des letzteren setzbar ist.

Die Abschirmhaube 7 benötigt dabei aber außer den Dichtungselementen 10 noch weitere Dichtungselemente, welche zwischen ihr und dem Spritzling-Zentrierkanal wirksam sind. Diese Dichtungselemente sollten so vorgesehen werden, daß sie zumindest dann ihre Wirkstellung einnehmen, wenn die Abschirmhaube 7 ihre abgesenkte Arbeitsstellung einnimmt, während sich der Spritzling-Zentrierkanal 6 in seiner angehobenen Ruhestellung befindet.

## Patentansprüche

1. Verfahren zur Qualitätsüberwachung von durch Spritz- bzw. Druckgießmaschinen hergestellten Formteilen bei welchem einzelne Formteile nach dem Ausstoßen aus der Spritzform gewogen werden, bei dem dann der Gewichts-Istwert mit einem Gewichts-Sollwert verglichen wird sowie schließlich ein daraus resultierendes Differenzsignal die Spritz- bzw. Druckgießmaschine und/oder die Spritzform im Sinne einer Gewichtskorrektur für die Formteile beeinflußt wird,
**dadurch gekennzeichnet,**
daß einerseits jedes Formteil möglichst exakt zentrisch auf die Wägezone (4) geführt (6) wird, daß andererseits die gesamte Wägezone (4) mindestens während des Wägevorgangs gegen die Umgebungseinflüsse abgeschirmt wird (7), daß das durch die Wägung ermittelte Formteilgewicht mit zwei Gewichts-Grenzwerten verglichen wird, daß durch diese Gewichts-Grenzwerte jeweils Gut-Formteile und Ausschuß-Formteile bestimmt werden, und daß dann die Gut-Formteile und die Ausschuß-Formteile aus dem Bereich der Wägezone (4) in unterschiedlichen Richtungen entsorgt bzw. abtransportiert werden (11, 12).

2. Verfahren nach Anspruch 1,
**dadurch gekennzeichnet,**
daß die Formteil-Zuführung auf die Wägezone (4) und die Abschirmung (7) der Wägezone (4) zeitlich nacheinander bewirkt werden.

3. Verfahren nach einem der Anprüche 1 und 2,
**dadurch gekennzeichnet,**
daß die Wägezone (4) bei der Abschirmung (7) nahezu luftdicht abgeschlossen wird.

4. Vorrichtung zur Durchführung des Verfahrens nach einem der Ansprüche 1 bis 3,
bestehend aus einem dem Formteil-Ausfalltrichter (2) einer Spritz- oder Druckgießmaschine nachgeordneten elektronischen Prüfwaage (3), über deren Ausgangssignal die Spritz- bzw. Druckgießmaschine und/oder die Spritzform beeinflußbar ist,
**dadurch gekennzeichnet,**
daß vom Ausfalltrichter (2) her ein Spritzling-Zentrierkanal (6) wenigstens zeitweilig an die Wägezone (4) der Prüfwaage (3) heranführbar und darüber hinaus, ebenfalls mindestens zeitweilig, eine Abschirmhaube (7) über die gesamte Wägezone (4) setzbar ist.

5. Vorrichtung nach Anspruch 4,

**dadurch gekennzeichnet,**

daß mindestens das Auslaßende des Spritzling-Zentrierkanals (6) einen Durchmesser hat, der eng an das Größtmaß des jeweiligen Formteils angepaßt ist.

6. Vorrichtung nach einem der Ansprüche 4 und 5,

**dadurch gekennzeichnet,**

daß der Spritzling-Zentrierkanal (6) relativ zur Wägezonen-Ebene der Prüfwaage (3) heb- und senkbar angeordnet ist.

7. Vorrichtung nach einem der Ansprüche 4 bis 6,

**dadurch gekennzeichnet,**

daß die Abschirmhaube (7) von einem normal zur Bewegungsrichtung des Spritzling-Zentrierkanals (6) verstellbaren Schieber und einer quer zu dessen Bewegungsrichtung orientierten Anschlagwand (9) hierfür besteht, wobei Schieber und Anschlagwand (9) gegen eine die Wägezone (4) der Prüfwaage (3) umgebende Basisplatte (8) abdichtbar sind (10).

## Claims

1. Method for the monitoring of the quality of moulded parts produced by injection-moulding or die-casting machines, in which individual moulded parts are weighed after the ejection from the injection mould and in which the actual value of the weight is then compared with a target value of the weight as well as finally, by way of a difference signal resulting therefrom, the injection-moulding or die-casting machine and/or the injection mould is influenced in the sense of a weight correction for the moulded part,

**characterised thereby that**

on the one hand each moulded part is fed (6) as exactly centrally as possible to the weighing zone (4), that on the other hand the entire weighing zone (4) is screened (7) against the environmental influences at least during the weighing process, that the weight of the moulded part detected by the weighing is compared with two weight threshold values, that each time acceptable moulded parts and reject moulded parts are determined by these weight threshold values, and that the acceptable moulded parts and the reject moulded parts are then discarded or transported (11, 12) out of the region of the weighing zone (4) in different directions.

2. Method according to claim 1,

**characterised thereby that**

the feed of the moulded parts to the weighing zone (4) and the screening (7), of the weighing zone (4) are effected one after the other in time.

3. Method according to one or claims 1 and 2,

**characterised thereby that**

in the case of the screening (7) the weighing zone (4) is almost hermetically closed off.

4. Device for the carrying out of the method according to one of claims 1 to 3,

consisting of an electronic checking weighing machine (3), which is arranged downstream of a moulded part deposit hopper (2) of an injection-moulding or die-casting machine and by way of the output signal of which the injection-moulding or die-casting machine and/or the injection mould can be influenced,

**characterised thereby that**

a centring channel (6) for injection mouldings can be brought forward from the deposit hopper (2) at least temporarily to the weighing zone (4) of the checking weighing machine and beyond that a screening hood (7) can be placed, likewise at least temporarily, over the entire weighing zone (4).

5. Device according to claim 4,

**characterised thereby that**

at least the outlet end of the centring channel (6) for injection mouldings has a diameter which is closely matched to the largest dimension of the respective moulded part.

6. Device according to one of the claims 4 and 5,

**characterised thereby that**

the centring channel (6) for injection mouldings is arranged to be raisable and lowerable relative to the plane of the weighing zone of the checking weighing machine (3).

7. Device according to one of claims 4 to 6,

**characterised thereby that**

the screening hood (7) consists of a slide adjustable perpendicularly to the direction of movement of the centring channel (6) for injection mouldings and an abutment wall (9) therefor oriented transversely to the direction of movement of the slide, wherein slide and abutment wall (9) are sealable (10) relative to a base plate (8) surrounding the weighing zone (4) of the checking weighing machine (3).

## Revendications

1. Procédé de contrôle de la qualité de pièces fabriquées par des presses à injection ou par des machines à couler sous pression, dans lequel les pièces, après leur éjection du moule, sont pesées individuellement, dans lequel la valeur réelle de leur poids est ensuite comparée à une valeur de consigne de leur poids et dans lequel, enfin, un signal différentiel résultant de cette comparaison provoque une modification de la presse à injection ou de la machine à couler sous pression et/ou du moule aboutissant à une correction du poids des pièces,

**caractérisé en ce que,**

d'une part, chaque pièce est dirigée (6) d'une manière aussi exactement centrée que possible sur la zone de pesée (4), en ce que, d'autre part, l'ensemble de la zone de pesée (4) est, au moins pendant la durée de la pesée, maintenue à l'abri (7) de l'influence de l'environnement, en ce que le poids de la pièce déterminée par la pesée est comparé à deux valeurs limites du poids, en ce que ces valeurs limites du poids correspondent respectivement à des pièces bonnes pour la réception et à des pièces à mettre au rebut et en ce que les pièces bonnes pour la réception et les pièces à mettre au rebut sont évacuées ou transportées dans des directions différentes (11, 12) hors de la zone de pesée (4).

2. Procédé selon la revendication 1,

**caractérisé en ce que**

l'amenée des pièces dans la zone de pesée (4) et l'isolement (7) de la zone de pesée s'effectuent chronologiquement l'un après l'autre.

3. Procédé selon l'une des revendications 1 ou 2,

**caractérisé en ce que**

l'isolement (7) de la zone de pesée (4) assure une étanchéité à l'air presque complète.

4. Dispositif pour l'application du procédé selon l'une des revendications 1 à 3,

constitué par un dispositif électronique de pesée qui est placé en aval de la trémie d'éjection (2) des pièces dans une presse à injection ou une machine à couler sous pression et qui, par l'intermédiaire d'un signal de sortie qu'il émet, provoque une modification de la presse à injection ou de la machine à couler et/ou du moule,

**caractérisé en ce qu'**

à partir de la trémie d'éjection (2) un conduit de centrage (6) des pièces obtenues par injection peut être approché, au moins pendant un certain temps, de la zone de pesée et que, également au moins pendant un certain temps, une enveloppe de protection (7) peut être placée sur l'ensemble de la zone de pesée (4).

5. Dispositif selon la revendication 4,

**caractérisé en ce que**

l'extrémité de sortie au moins du conduit de centrage (6) des pièces obtenues par injection a un diamètre étroitement adapté aux dimensions maximales des pièces correspondantes.

6. Dispositif selon l'une des revendications 4 ou 5,

**caractérisé en ce que**

le conduit de centrage (6) des pièces obtenues par injection est monté de manière à pouvoir s'élever et s'abaisser par rapport au plan de la zone de pesée du dispositif de pesée (3).

7. Dispositif selon une des revendications 4 à 6,

**caractérisé en ce que**

l'enveloppe de protection (7) est constituée par une pièce coulissante qui peut se déplacer dans la direction normale à la direction de déplacement du conduit de centrage (6) des pièces obtenues par injection et par une paroi de butée (9) orientée transversalement par rapport à cette direction de déplacement, la pièce coulissante et la paroi de butée pouvant être hermétiquement isolées par rapport à une plaque de base (8) qui entoure la zone de pesée (4) du dispositif de pesée (3).

Fig. 1

Fig. 2

Fig. 3

Fig. 4